# FASCICULE DE BREVET EUROPEEN

(11) **EP 2 360 889 B1**
(45) Date de publication et mention de la délivrance du brevet: **03.04.2019**
(21) Numéro de dépôt: 11153656.1
(22) Date de dépôt: 08.02.2011
(51) Int. Cl.: H04L 29/06

(54) **Création et utilisation d'un lien de télécommunication entre deux utilisateurs d'un réseau de télécommunication**
Erstellung und Benutzung einer Telekommunikationsverbindung zwischen zwei Benutzern eines Telekommunikationsnetzes
Creation and use of a telecommunication link between two users of a telecommunication network

(30) Priorité: 15.02.2010 FR 1051057
(43) Date de publication de la demande: 24.08.2011
(73) Titulaire: Orange, 75015 Paris (FR)
(72) Inventeur: Tarrago, Aline, 94260, Fresnes (FR); Combet, Laurent, 75017, Paris (FR); Meyer, Roland, 06000, Nice (FR)

(56) Documents cités:
- EP-A1- 1 653 697
- US-A1- 2004 168 055
- US-A1- 2009 215 476

## Description

### Domaine technique

L'invention concerne la création et l'utilisation d'un lien de télécommunication entre deux utilisateurs d'un réseau de télécommunication. En particulier, l'invention concerne la création technique d'un réseau de liens sociaux empruntant un réseau de télécommunication.

### Technique antérieure

Dans le passé, lorsqu'un utilisateur souhaitait rentrer en contact avec un autre utilisateur d'un réseau de communication, il utilisait un terminal de communication pour établir une session de communication avec un autre terminal de communication associé à l'autre utilisateur. Une fois la communication terminée, il n'était conservé, pour le compte de ces utilisateurs aucun historique de la relation à distance entre les deux utilisateurs. Et, aucun échange de contenu n'était possible en dehors de l'échange vocal au cours de cette session entre les deux utilisateurs US 2009/215476 A1 décrit un système et un procédé permettant l'échange de messages instantanés entre des dispositifs mobiles, en particulier lorsqu'un dispositif mobile a accès à des informations relatives à un autre dispositif mobile. Le système permet à une application de messagerie instantanée de communiquer directement avec) l'autre appareil mobile, sans exiger d'échange de courrier électronique initial.

Internet a permis de conserver ces liens en mettant en place des sites de réseautage social (social networking en anglais). Ces sites permettent aux utilisateurs d'enregistrer les liens qui existent entre eux, de les conserver et de les utiliser pour interagir entre eux notamment par messagerie instantanée, par messagerie électronique, etc.

Le réseautage social permet d'établir et d'enregistrer un lien entre un utilisateur d'Internet, en fonction du profil qu'il présente sur Internet, et un ou plusieurs utilisateurs, à savoir « mes amis » ainsi que les utilisateurs lui étant déjà liés, « les amis de mes amis ». Certains sites de réseautage social souffrent d'ailleurs de la charge imposée par le graphe social exponentiel dessiné par ces nombreux liens.

Les utilisateurs sont donc immergés dans un graphe social exponentiel, ne répondant plus à tous leurs besoins. En particulier, celui de bénéficier d'un univers de confiance, à l'abri des regards et protégé de toute intrusion, pour interagir de façon plus créatrice, dans un cercle restreint d'utilisateurs. D'ailleurs, le nombre d'utilisateurs intervenant dans un forum de discussion se réduit généralement assez rapidement à quelques utilisateurs actifs, les autres utilisateurs suivant de très loin la discussion voire sans désintéressant rapidement.

Sur Internet, en raison de l'anonymat et du principe économique dominant de financement par la publicité, et donc de la recherche de l'audience, le lien se fait entre des utilisateurs virtuels, le choix des contenus mis à disposition du réseau étant motivé par la méfiance sur l'utilisation qui en sera faite. Ainsi, les informations circulant sur les sites de réseautage sociaux ont un degré de fiabilité faible et l'utilisateur mettant à disposition des contenus n'a aucun moyen de pouvoir les retirer lorsque l'utilisateur qu'il est fait de ses contenus ne lui convient plus.

### Résumé de l'invention

Un des buts de la présente invention est d'apporter des améliorations par rapport à l'état de la technique.

Un objet de l'invention est un procédé de création d'un lien de télécommunication entre un premier ensemble de dispositifs de communication associés à un premier utilisateur et un second ensemble de dispositifs de communication associés à un second utilisateur comportant une génération d'un couple d'identifiants certifiés comportant deux identifiants d'utilisateurs certifiés : un identifiant d'un premier utilisateurs et un identifiant d'un second utilisateur, le couple d'identifiants certifiés étant apte à permettre, en utilisant ultérieurement le lien de télécommunication créé, un établissement direct d'une session de communication entre au moins un dispositif de communication du premier ensemble et un dispositif de communication du second ensemble.

Ainsi, le lien créé est certifié, il permet de relier deux utilisateurs du réseau de télécommunication et non leur projection dans le réseau. En outre, le lien est uniquement entre ces deux utilisateurs, l'information concernant son existence n'est accessible que pour des raisons techniques de contrôle d'accès ; de ce principe découle une limitation de la dimension du graphe du réseautage social, et donc une meilleure maîtrise des échanges par l'utilisateur source, le premier utilisateur.

Avantageusement, le procédé de création de lien de télécommunication comporte une invitation d'un dispositif de communication du premier ensemble disposant d'un identifiant certifié du premier utilisateur à un dispositif de communication du second ensemble disposant d'un identifiant certifié du second utilisateur.

Ainsi le lien n'est pas bijectif et est créer uniquement à l'initiative de l'utilisateur source, le premier utilisateur.

Avantageusement, ledit procédé de création de lien de télécommunication comporte une association d'une plage temporelle audit lien, ladite plage temporelle étant apte à interdire l'établissement d'une session de communication entre au moins un dispositif de communication du premier ensemble et un dispositif de communication du second ensemble en dehors de ladite plage temporelle.

Ainsi, l'utilisateur créant le lien peut planifier des rencontres occasionnelles avec des interlocuteurs spécifiques bien identifiés.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif de communication et étant conçus pour commander l'exécution des différentes étapes de ce procédé.

L'invention vise donc aussi un programme comprenant des instructions de code de programme pour l'exécution des étapes du procédé de création de lien de télécommunication lorsque ledit programme est exécuté par un processeur.

Un autre objet de l'invention est un procédé d'établissement d'une session de communication utilisant un lien de télécommunication comportant, ultérieurement à la création du lien de télécommunication entre un premier ensemble de dispositifs de communication associés à un premier utilisateur (U1) et un second ensemble de dispositifs de communication associés à un second utilisateur (U2), un établissement direct, à partir d'un couple d'identifiants certifiés comportant deux identifiants d'utilisateurs certifiés : un identifiant d'un premier utilisateur et un identifiant d'un second utilisateur, d'une session de communication entre au moins un dispositif de communication d'un premier ensemble de dispositifs de communication associés audit premier utilisateur et un dispositif de communication d'un second ensemble de dispositifs de communication associés audit second utilisateur.

Avantageusement, le procédé d'établissement d'une session de communication utilisant un lien de télécommunication comporte un transfert du premier utilisateur vers un troisième utilisateur, ledit transfert permettant de transférer ladite session de communication du dispositif de communication d'un premier ensemble de dispositifs de communication associés audit premier utilisateur vers au moins un dispositif de communication d'un troisième ensemble de dispositifs de communication associés au troisième utilisateur.

Ainsi, le premier utilisateur peut demander à un troisième utilisateur de prendre en charge le lien avec le deuxième utilisateur pour diverses raisons notamment de disponibilité afin que le deuxième utilisateur puisse échanger dans le même contexte que celui prévu avec le premier utilisateur : notamment le troisième utilisateur est un autre membre de la famille, ou dans le cas de lien professionnel : un assistant ou un collaborateur. Ce transfert peut être fait de manière :
- globale pour toutes les applications partagées et/ou échanges associés ou non à ces applications partagées utilisant ce lien,
- spécifique pour une ou plusieurs applications partagées et/ou échanges associés à ces applications partagées utilisant ce lien.

Avantageusement, le procédé d'établissement d'une session de communication utilisant un lien de télécommunication comporte une association d'une application à partager avec ledit lien de télécommunication.

Ainsi, l'application peut être un prétexte à échanger pour le premier utilisateur et le deuxième utilisateur du lien. Notamment, autour d'une application de type loisir tel qu'un album photo que le premier utilisateur a associer au lien en partage : le deuxième utilisateur peut ainsi consulter l'album photo et, grâce au lien, le premier utilisateur peut le rejoindre sur l'album photo qu'il verra dans le même contexte que le deuxième utilisateur (c'est-à-dire que si le deuxième utilisateur passe à la photo suivante, le premier utilisateur se verra automatiquement afficher cette même photo) et/ou commencer une communication textuel, audio, ou vidéo avec le deuxième utilisateur : cette communication utilisant le lien.

Avantageusement, le procédé d'établissement d'une session de communication utilisant un lien de télécommunication comporte un transfert du premier utilisateur vers un troisième utilisateur, ledit transfert permettant de transférer du premier utilisateur au troisième utilisateur un partage d'une application à partager associée audit lien du premier utilisateur avec le deuxième utilisateur.

Ainsi, le premier utilisateur peut demander à un troisième utilisateur de prendre en charge le lien avec le deuxième utilisateur pour une application à partager associé au lien pour diverses raisons notamment de disponibilité afin que le deuxième utilisateur puisse échanger dans le même contexte que celui prévu avec le premier utilisateur : notamment le troisième utilisateur est un autre membre de la famille, ou dans le cas de lien professionnel : un assistant ou un collaborateur pour cette application à partager uniquement.

Avantageusement, ledit procédé d'établissement d'une session de communication utilisant un lien de télécommunication comporte une résiliation d'un lien de télécommunication entre un premier et un second utilisateurs sur demande d'au moins un dispositif de communication parmi des dispositifs d'un premier ensemble de dispositifs de communication associés à un premier utilisateur et d'un second ensemble de dispositifs de communication associés à un second utilisateur.

Ainsi, chacun des deux interlocuteurs conserve la maîtrise du lien en pouvant décider à tout moment et de manière unilatérale de rompre ce lien.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif d'un réseau de télécommunication et étant conçus pour commander l'exécution des différentes étapes de ce procédé.

L'invention vise donc aussi un programme comprenant des instructions de code de programme pour l'exécution des étapes du procédé d'établissement d'une session de communication utilisant un lien de télécommunication un lien de télécommunication lorsque ledit programme est exécuté par un processeur.

Ces programmes peuvent utiliser n'importe quel langage de programmation et être sous la forme de code source, code objet ou code intermédiaire entre code source et code objet tel que dans une forme partiellement compilée ou dans n'importe quelle autre forme souhaitable.

L'invention vise aussi, pour un ou plusieurs de ces programmes, un ou plusieurs supports d'informations.

Les supports d'informations peuvent être n'importe quelles entités ou dispositifs de communication capable de stocker le programme. Par exemple, les supports peuvent comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, les supports d'informations peuvent être des supports transmissibles tels qu'un signal électrique ou optique qui peut être acheminé via un câble électrique ou optique, par radio ou par d'autres moyens. Les programmes selon l'invention peuvent être en particulier téléchargés sur un réseau notamment de type Internet.

Alternativement, les supports d'informations peuvent être des circuits intégrés dans lesquels un ou plusieurs des programmes sont incorporés, le circuit étant adapté pour exécuter ou pour être utilisé dans l'exécution du procédé en question.

Dans une autre implémentation, l'invention est mise en oeuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonction selon la description ci-dessous. Un composant matériel correspond à tout élément d'un ensemble matériel (ou hardware) apte à mettre en oeuvre une fonction ou un ensemble de fonctions.

Un objet de l'invention est également un lien de télécommunication comportant un couple d'identifiants certifiés, le couple d'identifiants certifiés comportant deux identifiants d'utilisateurs certifiés : un identifiant d'un premier et un identifiant d'un second utilisateur, le couple d'identifiants certifiés étant apte à permettre, en utilisant ultérieurement le lien de télécommunication créé, un établissement direct d'une session de communication entre au moins un dispositif de communication d'un premier ensemble de dispositifs de communication associés audit premier utilisateur et un dispositif de communication d'un second ensemble de dispositifs de communication associés audit second utilisateur.

L'invention a pour objet un dispositif d'un réseau de télécommunication caractérisé en ce que ledit dispositif du réseau de télécommunication comporte des moyens de génération d'un couple d'identifiants certifiés comportant deux identifiants d'utilisateurs certifiés : un identifient d'un premier utilisateur et un identifiant d'un second utilisateur, le couple d'identifiants certifiés étant apte à permettre, en utilisant ultérieurement le lien de télécommunication créé, l'établissement direct d'une session de communication entre au moins un dispositif de communication d'un premier ensemble de dispositifs de communication associés audit premier utilisateur et un dispositif de communication d'un second ensemble de dispositifs de communication associés audit second utilisateur.

Avantageusement, le dispositif d'un réseau de télécommunication comporte des moyens d'établissement, à partir d'un couple d'identifiants certifiés d'un premier et d'un second utilisateur, d'une session de communication entre ledit dispositif de communication dudit premier utilisateur et un dispositif de communication dudit second ensemble.

L'invention a aussi pour objet un dispositif de gestion d'un service relationnel entre utilisateurs comportant le dispositif du réseau de télécommunication.

Ainsi, c'est un fournisseur de service qui a la charge de la gestion des liens permettant une mise en relation plus sécurisé car aucun des interlocuteurs ne dispose du couple d'identifiants certifiés.

Avantageusement, le dispositif de gestion d'un service comporte des moyens de stockage de contenus associés à un premier utilisateur dudit lien de télécommunication, les moyens de stockage sont aptes à permettre à un dispositif de communication du second utilisateur l'accès audit contenu associé audit premier utilisateur dudit lien de télécommunication lors d'une session de télécommunication établie en utilisant ledit lien.

Ainsi, le lien crée permet un partage de contenus de la part d'un utilisateur source, le premier utilisateur, qui en conserve la maîtrise. Cela permet au fournisseur d'un tel service de partage de contenu basé sur le lien de télécommunication ainsi créé de responsabiliser l'utilisateur source sur les contenus qu'il met à disposition dans le cadre du partage de contenus. Le placement de ces contenus dans des moyens de stockage de contenus du dispositif de gestion de service co-localisés ou non avec les moyens de génération de couples d'identifiants certifiés et les moyens d'établissement de session de communication permet à l'utilisateur partageant ses contenus de disposer d'un espace de stockage à dimension éventuellement modulable en fonction de ses besoins et de sécuriser ses dispositifs de communications en n'y donnant pas accès à des tiers. Le contenu est, notamment, accessible sous toutes les formes nécessaires au dispositif de communication utilisé par le lien, le cas échéant le dispositif de communication déclaré par celui qui a reçu le lien.

L'invention a en outre pour objet un dispositif de communication d'un premier utilisateur comportant le dispositif du réseau de télécommunication dans lequel l'identifiant certifié du premier utilisateur est fourni par ledit dispositif de communication.

Avantageusement, le dispositif de communication comporte des moyens d'invitation à un dispositif de communication disposant d'un identifiant certifié du second ensemble du second utilisateur apte à déclencher des moyens de génération en utilisant la réponse du dispositif de communication du second ensemble.

Avantageusement, un dispositif de communication d'un premier ensemble de dispositifs de communication associé à un premier utilisateur comportant le dispositif de communication décrit ci-dessus comporte des moyens de stockages de contenus associés audit lien de télécommunication apte à permettre à un dispositif de communication du second utilisateur l'accès audit contenu associé audit lien de télécommunication lors d'une session de télécommunication établie en utilisant ledit lien.

Ainsi le lien crée permet un partage de contenus de la part d'un utilisateur source, le premier utilisateur, qui en conserve la maîtrise. Cela permet au fournisseur d'un tel service de partage de contenu basé sur le lien de télécommunication ainsi crée de responsabiliser l'utilisateur source sur les contenus qu'il met à disposition dans le cadre du partage de contenus. En outre, un espace de partage de contenu peut être constitué d'un ou plusieurs de ces moyens de stockage qui peuvent se situer dans n'importe lequel voire dans plusieurs des dispositifs de communications du premier utilisateur partageant ses contenus. Au moins l'un de ces dispositifs de communications pouvant être des moyens associés au premier utilisateur situé dans le réseau de télécommunication par exemple sur un serveur d'un opérateur de télécommunication ou d'un fournisseur de services.

### Brève description des dessins

Les caractéristiques et avantages de l'invention apparaîtront plus clairement à la lecture de la description, faite à titre d'exemple, et des figures s'y rapportant qui représentent :
- Figure 1, un schéma simplifié de création de lien de télécommunication selon l'invention,
- Figure 2, un schéma détaillé d'une variante de réalisation d'une création d'un lien de télécommunication selon l'invention,
- Figure 3, un schéma simplifié d'utilisation de lien de télécommunication selon l'invention,
- Figures 4a et 4b, des schémas simplifiés d'architecture de réseau de télécommunication permettant la création et l'utilisation d'un lien de télécommunication selon l'invention, respectivement, dans un dispositif de gestion de service et dans un dispositif de communication d'un premier utilisateur.

### Description des modes de réalisation

Les variantes de l'invention décrites ci après pourront être mise en oeuvre seule ou en combinaison.

L'invention a pour objet un lien de télécommunication spécifique puisque comportant un couple d'identifiants certifiés de deux utilisateurs : un premier utilisateur et un second utilisateur. Ce lien de télécommunication est apte à permettre l'établissement d'une session de communication entre au moins un dispositif de communication d'un premier ensemble de dispositifs de communication associés audit premier utilisateur et un dispositif de communication d'un second ensemble de dispositifs de communication associés audit second utilisateur.

Par identifiant est entendu tout type de données identifiant directement ou indirectement l'utilisateur d'un dispositif de communication sur un réseau de télécommunication. Par identifiant direct est entendu un identifiant de l'utilisateur et non du dispositif de communication tel que le nom, une empreinte biométrique (empreinte digitale, palmaire, iris, etc.) et, par identifiant indirecte, un numéro de série du dispositif de communication, un identifiant de type SIM, etc. associé à un utilisateur.

Par identifiant certifié est entendu le fait que seul l'utilisateur associé à cet identifiant directement ou par l'intermédiaire de son dispositif de communication peut utiliser cette identifiant en raison de vérification de l'identité de l'utilisateur à la remise du dispositif de communication (comme un téléphone mobile avec la carte SIM) et de la sécurisation de l'identifiant associé, soit de la mise en place d'un tiers de confiance gérant des identifiants certifiés.

Les dispositifs de communication sont notamment des terminaux de communications tels que téléphone mobile, téléphone fixe, ordinateur connectés ou non au réseau par ADSL via une connexion filaire de type Ethernet en particulier ou via une connexion sans fil de type Wifi ou Bluetooth notamment ou encore connectés par réseau cellulaire (par exemple 3G), télévision connectés directement à Internet ou via un décodeur (set top box en anglais), objet communicant (tels que objets communicants de santé ou de loisirs ou autres périphériques sans contact), hub, (homme automation), etc. En outre, les dispositifs de communication peuvent être des moyens disposés dans le réseau et associé à l'utilisateur permettant notamment le partage de contenus (au sens large, contenus ou applications).

L'invention se situe donc dans le contexte technique de l'authentification notamment par la carte SIM et de la convergence des terminaux en utilisant des communautés de terminaux d'un utilisateur.

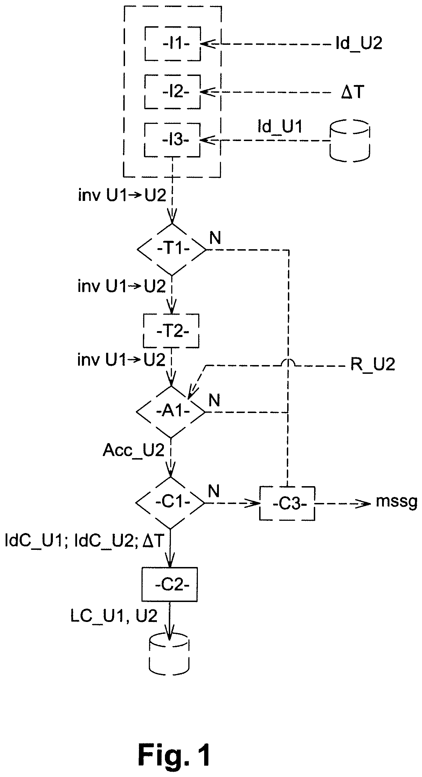

La figure 1 montre un schéma simplifié de création de lien de télécommunication selon l'invention. La création d'un lien de télécommunication entre :
- un premier utilisateur U1, représenté par un ensemble (un premier ensemble) de dispositifs de communication qui lui sont associés,
- et un second utilisateur, représenté lui aussi par un ensemble (un second ensemble) de dispositifs de communication qui lui sont associés,
comporte une génération C2 d'un couple d'identifiants certifiés des premier et second utilisateurs (IdC_ U1, IdC_ U2) apte à permettre l'établissement d'une session de communication entre au moins un dispositif de communication du premier ensemble et un dispositif de communication du second ensemble.

Dans un mode de réalisation particulier, le premier utilisateur U1 indique I1 le second utilisateur U2 avec lequel il souhaite établir un lien. Pour cela, il sélectionne notamment le second utilisateur U2 dans son carnet d'adresse permettant d'associer un identifiant Id_U2 de ce second utilisateur U2 à une invitation *inv* U1→U2. L'invitation *inv* U1→U2 sera générée en utilisant cette indication. Dans un mode de réalisation particulier, l'identifiant Id_U2 du second utilisateur est un identifiant certifié.

Dans un mode de réalisation particulier, le premier utilisateur créant un lien de télécommunication se voit proposer la possibilité de le limiter dans le temps. La génération de l'invitation *inv* U1→U2 comporte l'association d'une plage temporelle ΔT audit lien. Cette plage temporelle est notamment indiquée I2 par le premier utilisateur U1 ou extraite d'un agenda. Ladite plage temporelle étant apte à interdire l'établissement d'une session de communication entre au moins un dispositif de communication du premier ensemble et un dispositif de communication du second ensemble en dehors de ladite plage temporelle.

Dans un mode de réalisation particulier, la génération de l'invitation *inv* U1→U2 comporte la récupération I3 d'un identifiant Id_U1 du premier utilisateur U1 dans une mémoire du dispositif de communication utilisé par le premier utilisateur U1 pour demander la création du lien, notamment la carte SIM du téléphone mobile du premier utilisateur. Dans un mode de réalisation particulier, l'identifiant Id_U1 du premier utilisateur est un identifiant certifié.

Dans un mode de réalisation particulier, le premier utilisateur utilise des moyens d'interface (I1,I2,I3) pour demander la création du lien.

Dans un mode de réalisation particulier l'invitation *inv* U1→U2 est transmise T1 à un réseau de télécommunication qui vérifie si l'existence la possibilité d'établissement d'un lien avec le second utilisateur, notamment en fonction de l'identifiant, sinon N un message mssg de non création de lien est envoyé C3 au premier utilisateur U1.

Dans un mode de réalisation particulier, l'invitation *inv* U1→U2 est transmise T2 par un réseau de télécommunication à un dispositif de communication du second utilisateur U2, notamment au dispositif de communication associé à l'identifiant Id_U2 ou à l'identifiant certifié. En particulier, cette transmission T2 est effectué si le second utilisateur U2 dispose d'un identifiant certifié IdC_U2 comme vérifié T1 par le réseau.

Dans un mode de réalisation particulier le lien de télécommunication est valide si le détenteur et le visiteur sont d'accord : Notamment, le second utilisateur U2 se voit proposer A1 l'établissement d'un lien avec le premier utilisateur U1. Le second utilisateur U2 répond R_U2 à cette proposition. Le second utilisateur U2 accepte Acc_U2 ou refuse N l'établissement de ce lien. S'il refuse N, un message mssg de non création de lien est envoyé C3 au premier utilisateur U1.

Dans un mode de réalisation particulier, préalablement à la création du lien, est vérifié C1 si les deux identifiants fournis Id_U1 et Id_U2 sont certifiés et/ou sont récupérés des identifiants certifiés IdC_U1 et IdC_U2 associés aux identifiants fournis Id_U1 et Id_U2. Si au moins un des deux utilisateurs ne disposent pas d'identifiant certifié, le lien n'est pas créé N et un message mssg de non création de lien est envoyé C3 au premier utilisateur U1.

Dans un mode de réalisation particulier, les identifiants certifiés IdC_U1, IdC_U2 sont apportés par les cartes SIM de dispositifs de communication associés respectivement au premier utilisateur U1 et au second utilisateur U2. La carte SIM apporte une authentification forte. Cette certification permet de générer un lien de télécommunication responsabilisant les deux utilisateurs : le premier utilisateur U1 et le second utilisateur U2 car ils sont identifiés de manière certaine. En outre cette certification du lien permet d'établir une confiance réciproque entre les deux utilisateurs du lien. La responsabilité et la confiance réciproque ainsi établies pour ce lien permettent ensuite d'utiliser ce lien pour certaines applications comme le partage de contenus pour lesquelles elles sont indispensables.

Dans un mode de réalisation particulier, le lien créé est enregistré.

Dans un mode de réalisation particulier, le procédé de création de lien de télécommunication comporte une invitation *inv* U1→U2 d'un dispositif de communication du premier ensemble disposant d'un identifiant certifié du premier utilisateur à un dispositif de communication du second ensemble disposant d'un identifiant certifié du second utilisateur. Le premier utilisateur est alors aussi appelé utilisateur invitant ou hôte ou source. Le lien peut alors être un outil non bijectif car l'invitant peut être déterminé comme seul responsable du lien c'est-à-dire que notamment il peut se voir attribuer des fonctions de type administrateur sur les applications ouvertes en utilisant ce lien. Par exemple, dans le cadre d'une utilisation du lien pour le partage de contenus, seul l'utilisateur invitant peut gérer des droits d'accès à des contenus que seul lui peut mettre à disposition. Il est donc responsable de ce qu'il propose et de l'utilisation qui en est faite par le second utilisateur encore appelé utilisateur invité ou utilisateur destinataire du lien.

Dans un mode de réalisation particulier, ces liens peuvent être gérés dans un carnet d'adresse spécifique de lien ou dans un carnet d'adresse spécifique à un mode de communication par exemple le carnet d'adresse du téléphone mobile ou de la messagerie électronique ou dans un carnet d'adresse convergent. L'utilisation d'un carnet d'adresse convergent présente l'intérêt de pouvoir gérer les ensembles de dispositifs de communication associés aux utilisateurs et donc la convergence des terminaux.

Notamment, pour chaque second utilisateur inscrit dans le carnet d'adresse d'un premier utilisateur, outre les identifiants de dispositifs de communication tels qu'adresse email, numéro de téléphone fixe et/ ou numéro de téléphone mobile sera enregistré un ou plusieurs identifiant de lien et éventuellement ses attributs tels que s'il s'agit ou non d'un lien à durée limité (et le cas échéant, il pourrait être envisagé d'indiquer la plage temporelle du lien), l'état d'un lien (hôte, invité, refusé par l'invité, pas de lien, demande d'activation), l'action possible sur le lien (résiliation, nouvelle demande, activation, invitation à traiter), éventuellement le dispositif de communication de l'ensemble des dispositifs de communication de l'utilisateur à utiliser pour ce lien.

Il peut en effet être envisagé que plusieurs liens soit enregistré pour un seul et même second utilisateur :
- un lien dont le premier utilisateur est hôte et le second utilisateur est invité
- et un lien dont le premier utilisateur est invité et le second utilisateur est hôte.

Cette configuration étant particulièrement intéressante lorsque les liens ne sont pas bijectifs c'est à dire que l'utilisateur hôte dispose de certains moyens et/ou fonctionnalités dont ne dispose pas l'utilisateur invité (tel que des fonctionnalités de type administrateur et/ou modérateur, des moyens de stockage dans le réseau, etc.).
Ou
- Un lien illimité entre un premier utilisateur et un second utilisateur pour une application (lecture d'un contenu par exemple)
- Et un lien limité entre les mêmes, premier utilisateur et second utilisateur, pour une autre application (contribution à ce même contenu ou accès à un autre contenu par exemple)

Alternativement à ce dernier mode de réalisation, il peut être envisagé qu'un seul lien « un vers un » existe entre un premier utilisateur et un second utilisateur pour un ou plusieurs contenus (au sens large à savoir contenu multimédia et/ou applications) et un ou plusieurs type d'accès (lecture, contribution, etc.)

Par exemple, l'état d'un lien du premier utilisateur du carnet d'adresse peut être un ou plusieurs des états parmi les états suivants :
- Hi :: Lien de télécommunication illimité dont le premier utilisateur est l'hôte
- Ii :: Lien de télécommunication illimité dont le premier utilisateur est l'invité
- He :: Lien de télécommunication limité dans le temps ou soirée dont le premier utilisateur est l'hôte
- Ie :: Lien de télécommunication limité dans le temps ou soirée à laquelle le premier utilisateur est invité
- R :: demande de Lien de télécommunication refusée par le second utilisateur invité
- ?:: Statut de la demande d'activation (A TRAITER si le premier utilisateur est invité, en cours de traitement si le premier utilisateur est l'hôte)

Les actions possibles sur un lien sont notamment :

| | |
|---|---|
| RESILIATION | Pas d'écran particulier. Transfert de la demande à l'Application Server BIND qui met à jour la base de données, puis rafraichissement de la page pour prise en compte du nouveau statut |
| ACTIVATION | cette action permet de déclencher la création d'un nouveau lien avec le second utilisateur |
| NOUVELLE DEMANDE | cette action permet soit de déclencher la création d'un nouveau lien avec le second utilisateur soit de demander au second utilisateur s'il conforme son refus du lien. |
| INVITATION A TRAITER | Cette action permet d'autoriser la création d'un lien dont le premier utilisateur est l'invité |
| TRANSFERT | Cette action permet de transférer l'utilisation du lien du premier utilisateur vers un troisième utilisateur soit de manière globale pour toutes les applications à partager associées au lien soit pour une ou des applications sélectionnée(s) en particulier parmi toutes les applications à partager associées au lien. |

Dans un mode de réalisation particulier, une plage temporelle est associée au lien afin de limiter la durée d'utilisation du lien dans le temps, il s'agit d'un lien de type réunion de lien.

Dans un mode de réalisation particulier, un lien de type réunion de groupe comporte plusieurs deuxièmes utilisateurs et une plage temporelle. La création de lien de type réunion de groupe comporte la création de liens de télécommunication entre l'utilisateur source et chacun des utilisateurs destinataires comportant, à chaque fois une génération C2 d'un couple d'identifiants certifiés des premier et second utilisateurs (IdC_U1, IdC_U2) apte à permettre l'établissement d'une session de communication multiutilisateur entre au moins un dispositif de communication du premier ensemble et un dispositif de communication de chacun des seconds ensembles.

Dans un mode de réalisation particulier, le lien de télécommunication est apte à permettre le calcul d'une facturation de l'utilisateur invitant et/ou de l'utilisateur invité car ils sont identifiés de manière certaine.

Dans un mode de réalisation particulier, ce procédé est exécuté sous la forme d'un programme comprenant des instructions de code de programme pour l'exécution des étapes du procédé de création de lien de télécommunication lorsque ledit programme est exécuté par un processeur.

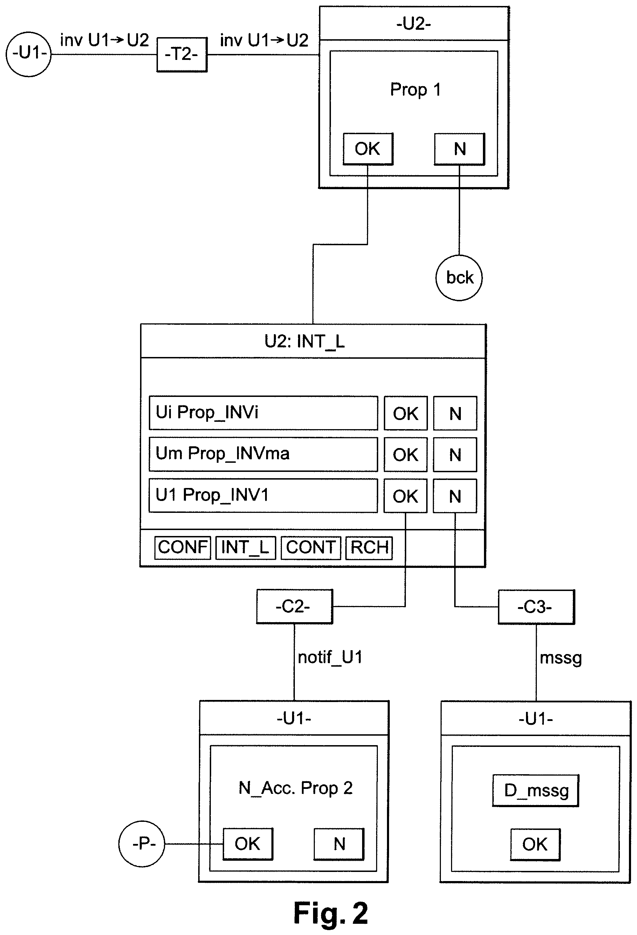

La figure 2 illustre un schéma détaillé d'une variante de réalisation d'une création d'un lien de télécommunication selon l'invention.

L'hôte, en l'occurrence, le premier utilisateur U1, demande l'activation, c'est-à-dire la création, d'un lien avec un second utilisateur U2 sous la forme d'une invitation *inv* U1→U2 Cette demande est prise en compte T2, par exemple par un dispositif du réseau qui mémorise la demande de lien et notifie le second utilisateur de l'invitation *inv* U1→U2.

L'utilisateur U2 lit la notification de demande de lien d'U1 et la proposition de traitement immédiat: P1 et accepte OK ou refuse N cette proposition. S'il refuse, l'interface de proposition de lien est automatiquement refermée BCK.

S'il accepte, une interface de gestion de lien U2 : INT_LC est ouverte listant l'ensemble des demandes de liens à traiter : sur la figure trois demandes de Ui, Um et U1 pour lesquels il peut accepter indépendamment la création du lien OK ou la refuser N

S'il la refuse, pour la demande refusée, un message *mssg* est envoyé C3 à l'utilisateur hôte, respectivement Ui, Um ou U1, qui peut alors lire le message de refus D_mssg et indiqué sa lecture OK.

S'il l'accepte, pour la demande acceptée, le lien associé est créé C2 et l'hôte en est notifié, respectivement Ui, Um ou U1, qui peut alors lire le message de création de lien et se voit proposer d'y associé une application, par exemple un contenu à partager P.

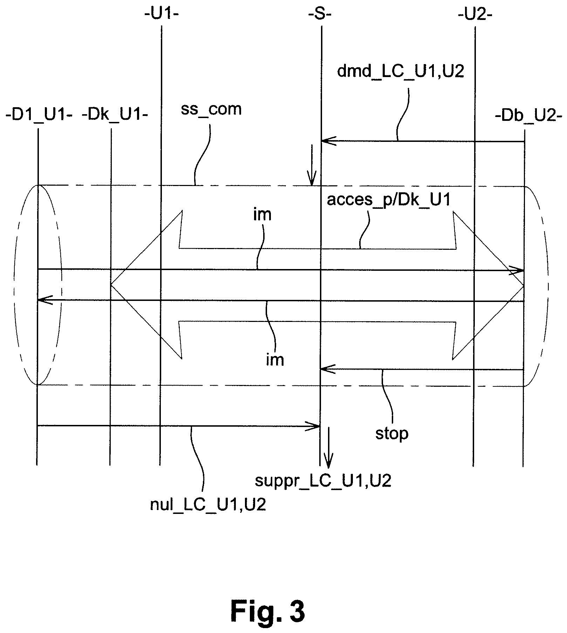

La figure 3 montre un schéma simplifié d'utilisation de lien de télécommunication selon l'invention. L'utilisation d'un lien de télécommunication comporte l'établissement, à partir d'un couple d'identifiants certifiés d'un premier et d'un second utilisateur (IdC_U1, IdC_U2) d'un lien de télécommunication LC_U1,U2, d'une session de communication *ss*_*com* entre au moins un dispositif de communication D1_U1 d'un premier ensemble de dispositifs de communication {D1_U1...Dk_U1} associés audit premier utilisateur U1 et un dispositif de communication Db_U2 d'un second ensemble de dispositifs de communication {D1_U2...Db_U2} associés audit second utilisateur U2.

En particulier, le procédé d'utilisation comporte une vérification que le dispositif de communication D1_U1 à l'initiative de l'utilisation du lien LC_U1,U2 est bien un dispositif de communication du premier ensemble de dispositifs de communication associés au premier utilisateur U1 dudit lien, préalablement à l'utilisation dudit lien notamment à l'établissement de la session de communication ss_com.

En particulier, le procédé d'utilisation comporte une vérification que le dispositif de communication Db_U2 interlocuteur dans l'utilisation du lien LC_U1,U2 est bien un dispositif de communication du deuxième ensemble de dispositifs de communication associés au deuxième utilisateur U2 dudit lien, préalablement à l'utilisation dudit lien notamment à l'établissement de la session de communication ss_com.

Ces vérifications des dispositifs de communication sont notamment des authentifications. Ces vérifications sont notamment mises en oeuvre par un dispositif du réseau de télécommunication comportant des moyens de création de lien ayant permis la création dudit lien entre le premier utilisateur et le deuxième utilisateur, ou encore déclenché par ce dispositif du réseau pour mise en oeuvre par des moyens d'authentification dans le réseau de communication.

En particulier, le premier utilisateur U1 peut transférer le lien avec le deuxième utilisateur vers un troisième utilisateur U3. Le transfert permet de transférer la session de communication du dispositif de communication d'un premier ensemble de dispositifs de communication associés audit premier utilisateur vers au moins un dispositif de communication d'un troisième ensemble de dispositifs de communication associés au troisième utilisateur. Par exemple, le premier utilisateur peut demander à un troisième utilisateur de prendre en charge le lien avec le deuxième utilisateur pour diverses raisons notamment de disponibilité afin que le deuxième utilisateur puisse échanger dans le même contexte que celui prévu avec le premier utilisateur : notamment le troisième utilisateur est un autre membre de la famille, ou dans le cas de lien professionnel : un assistant ou un collaborateur. Ce transfert peut être fait de manière global pour toutes les applications partagées et/ou échanges associés ou non à ces applications partagées utilisant ce lien.

Dans un mode de réalisation particulier, la session ss_com permet au second utilisateur d'accéder *acces*_p/Dk_U1 à un ou plusieurs contenus mis à disposition par le premier utilisateur U1 sur un dispositif de communication Dk_U1 constitué soit par un terminal du premier utilisateur comme le montre la figure 3 soit par des moyens d'un serveur S localisé dans le réseau de télécommunication, par exemple un serveur d'un fournisseur de service gérant les liens.

Dans un mode de réalisation particulier, la session *ss*_*com* permet au premier utilisateur U1 et au second utilisateur U2 d'échanger de manière synchrone *im* par exemple par messagerie instantanée, voire par VoIP simultanément ou non à l'accès au contenu.

En particulier, le premier utilisateur U1 peut transférer la maîtrise d'une application à partager P vers un troisième utilisateur U3 (non illustré). Ce transfert permet de transférer du premier utilisateur U1 au troisième utilisateur U3 le partage de l'application à partager P, c'est-à-dire la session ss_com permettant au troisième utilisateur U3 et au second utilisateur U2 d'échanger de manière synchrone *im* par exemple par messagerie instantanée, voire par VoIP simultanément ou non à l'accès au contenu.

Par exemple, une infirmière gérant un service de surveillance de malade à distance comportant d'une application de mesure de données médicales peut transfert la maîtrise de cette application de mesure de données médicales pour certains patients à une stagiaire. Ainsi, lorsque le patient accédera à l'application par exemple pour transmettre sa tension, la stagiaire pourra se mettre en relation avec le patient et le guider dans l'utilisation de cette application de mesure. Éventuellement, le stagiaire pourra accéder, lui aussi, avec les mêmes droits que l'infirmière, à l'application de mesure de données médicales telle qu'accédée par le patient, c'est-à-dire dans le même contexte que celui du patient. Ainsi, le stagiaire verra tout de suite à quel stade de la mesure le patient à besoin d'aide, et pourra mieux le guider dans via la communication établie. En outre, il pourra éventuellement interagir lui-aussi avec l'application pour aider le patient.

Dans un mode de réalisation particulier, la session ss_com est composée d'autant de sessions de communication que de mode de communication, à savoir par exemple une session de communication de streaming de contenu pour l'accès au contenu, une session de communication voix pour l'échange VoIP, une session de communication textuelle ou data pour l'échange en messagerie instantanée.

Dans un mode de réalisation particulier, l'un des premiers ou second utilisateurs clos la session de communication *stop* (le second utilisateur U2 dans l'exemple de la figure 3). Dans une variante de l'invention, l'arrêt de l'utilisation de l'application proposée par le lien (notamment la fin de l'accès au contenu partagé) par le second utilisateur U2 clos la session.

Dans un mode de réalisation particulier, le procédé comporte la résiliation *suppr*_LC_U1,U2 d'un lien de télécommunication entre un premier et un second utilisateurs sur demande *nul*_LC_U1,U2 d'au moins un dispositif de communication D1_U1 parmi des dispositifs d'un premier ensemble de dispositifs de communication associés à un premier utilisateur U1 et d'un second ensemble de dispositifs de communication associés à un second utilisateur U2.

En effet, le lien peut être résilié aussi bien par l'un ou l'autre des premiers et seconds utilisateurs c'est-à-dire aussi bien par l'un ou l'autre des utilisateurs hôte et invité.

Dans un mode de réalisation particulier, le procédé d'utilisation est implémenté sous la forme d'un programme comprenant des instructions de code de programme pour l'exécution des étapes du procédé d'utilisation d'un lien de télécommunication lorsque ledit programme est exécuté par un processeur. Ce processeur étant intégré à un dispositif de gestion de service et/ou à un dispositif de communication du premier utilisateur.

Les différentes modes de réalisations décrits précédemment peuvent être implémentés seuls ou en combinaison.

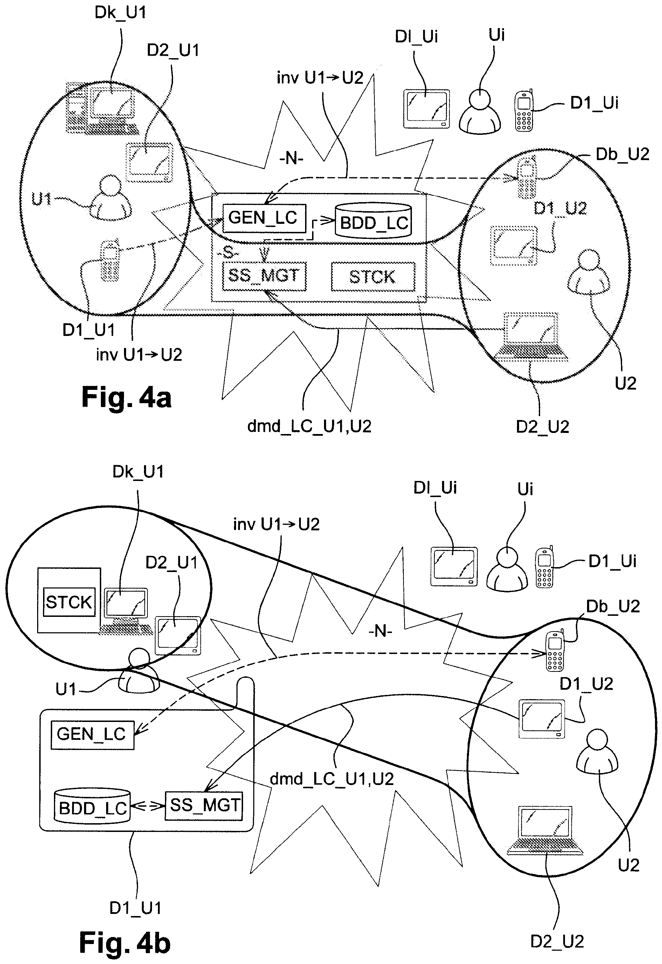

Les figures 4a et 4b illustrent des schémas simplifiés d'architecture de réseau de télécommunication permettant la création et l'utilisation d'un lien de télécommunication selon l'invention, respectivement, dans un dispositif de gestion de service et dans un dispositif de communication d'un premier utilisateur.

Un ou plusieurs réseaux de télécommunication N (notamment réseau de télécommunication filaire en mode ADSL, XDSL, etc., réseau de télécommunication cellulaire notamment 3G, UMTS, etc., optique, etc.), servent à plusieurs utilisateurs U1, U2...Ui pour échanger et recevoir des données ou contenus : communication vocale, vidéo, messagerie synchrone et asynchrone, contenus de type multimédia, applications, etc. sous divers formats.

Pour cela les utilisateurs disposent d'ensemble de dispositifs de communications tels que des ordinateurs Dk_U1, D2_U2, des téléphones mobiles D1_U1, Db_U2, D1_Ui, des télévisions connectés ou non via des décodeurs D2_U1, D1_U2, Dl_Ui.

Dans l'exemple de la figure 4a, un serveur S constituent un dispositif de gestion d'un service relationnel. Il comporte un dispositif du réseau de télécommunication II comporte des moyens de génération GEN_LC d'un couple d'identifiants certifiés d'un premier U1 et d'un second utilisateurs U2 apte à permettre l'établissement d'une session de communication entre au moins un dispositif de communication d'un premier ensemble de dispositifs de communication associés audit premier utilisateur {D1_U1, D2_U1...Dk_U1} et un dispositif de communication d'un second ensemble de dispositifs de communication associés audit second utilisateur {D1_U2, D2_U2...Db_U2}.

Dans un mode de réalisation particulier, un lien est généré par les moyens de génération à la demande *inv*U1→U2 d'un premier utilisateur (utilisateur hôte) U1 vers un second utilisateur (utilisateur invité) U2.

Dans un mode de réalisation particulier de l'invention, le serveur S ou le dispositif de gestion de service du serveur S comporte une base de données des liens BDD_LC permettant de conserver l'ensemble des liens. Cette base de donnée BDD_LC peut être localisé en un seul point du réseau de télécommunication N ou répartie afin notamment de permettre de réduire pour chaque utilisateur U1, U2, Ui le temps d'accès nécessaire aux liens dont il est l'hôte voire au lien dont il est l'invité.

Dans un mode de réalisation particulier de l'invention, le serveur S ou le dispositif de gestion de service du serveur S comporte des moyens d'établissement de session de communication SS_MGT apte à établir une session de communication en utilisant un lien, notamment sur demande *dmd*_LC_U1,U2 d'un utilisateur U2 d'un lien.

Dans un mode de réalisation particulier de l'invention, le serveur S ou un dispositif de gestion d'un service du serveur S comporte des moyens de stockages STCK de contenus p associés à un premier utilisateur U1 dudit lien de télécommunication C_U1,U2 apte à permettre à un dispositif de communication Db_U2 du second utilisateur U2 l'accès audit contenu associé audit premier utilisateur dudit lien de télécommunication lors d'une session de télécommunication *ss_com* établie en utilisant ledit lien.

Les différentes modes de réalisations décrits précédemment en relation avec la figure 4a peuvent être implémentés seuls ou en combinaison.

Dans un mode de réalisation illustré à la figure 4b alternatif à celui proposé par la figure 4v, les moyens de génération GEN_LC d'un couple d'identifiants certifiés d'un premier U1 et d'un second utilisateurs U2 apte à permettre l'établissement d'une session de communication entre au moins un dispositif de communication d'un premier ensemble de dispositifs de communication associés audit premier utilisateur {D1_U1, D2_U1...Dk_U1} et un dispositif de communication d'un second ensemble de dispositifs de communication associés audit second utilisateur {D1_U2, D2_U2...Db_U2} sont implémentés de manière répartie dans un des dispositifs de communication de chaque utilisateur. Ainsi, lorsqu'un premier utilisateur U1 souhaite crée un lien, ce sont les moyens de génération GEN_LC disponibles dans un de ces dispositifs de communication D1_U1 soit un terminal de communication comme le téléphone mobile illustré par la figure 4b, en particulier un terminal disposant de l'identifiant certifié du premier utilisateur IdC_U1, soit un dispositif de communication placé dans le réseau de communication et associé au premier utilisateur (non illustré).

Dans un mode de réalisation particulier, un lien est généré par les moyens de génération à la demande *inv*U1→U2 d'un premier utilisateur (utilisateur hôte) U1 vers un second utilisateur (utilisateur invité) U2.

Dans un mode de réalisation particulier de l'invention, le dispositif de communication du premier utilisateur D1_U1 comporte une base de données des liens BDD_LC permettant de conserver l'ensemble des liens.

Dans un mode de réalisation particulier de l'invention, le dispositif de communication du premier utilisateur D1_U1 comporte des moyens d'établissement de session de communication SS_MGT apte à établir une session de communication en utilisant un lien, notamment sur demande *dmd*_LC_U1,U2 d'un utilisateur U2 d'un lien.

Dans un mode de réalisation particulier de l'invention, un dispositif de communication du premier utilisateur distinct comme illustré Dk_U1 ou non du dispositif de communication D1_U1 comportant les moyens de génération de liens GEN_LC comporte des moyens de stockages STCK de contenus p associés à un premier utilisateur U1 dudit lien de télécommunication C_U1,U2 apte à permettre à un dispositif de communication Db_U2 du second utilisateur U2 l'accès audit contenu associé audit premier utilisateur dudit lien de télécommunication lors d'une session de télécommunication ss_*com* établie en utilisant ledit lien.

Les différentes modes de réalisations décrits précédemment en relation avec la figure 4b peuvent être implémentés seuls ou en combinaison.

Dans un mode de réalisation particulier, la convergence des accès et terminaux permet au détenteur et au visiteur de rentrer en communication tout en visualisant l'usage du contenu resté sous le contrôle du visiteur.

Dans un mode de réalisation particulier illustré par les figures 4a et 4b, lorsque un utilisateur U2 demande l'établissement du lien *dmd*_LC_U1,U2, ce lien est établit entre au moins un dispositif de communication du premier ensemble de dispositifs de communication du premier utilisateur U1 et au moins un dispositif de communication du second ensemble de dispositifs de communication du second utilisateur U2, par exemple entre d'un coté du lien : un dispositif de communication D2_U1, un dispositif de communication associé au premier utilisateur U1 dans le réseau de télécommunication N (non illustré) et de l'autre coté du lien : un dispositif de communication D1_U2.

Notamment, au moins l'un des premier et second utilisateurs peut indiquer lors de la création du lien le ou les dispositifs de communication à utiliser dans son ensemble de dispositifs de communication lors de l'utilisation du lien. Ainsi, lors de l'utilisation du lien, la session est établie avec les dispositifs de communication indiqués associé au lien.

Au moins l'un des premier et second utilisateurs peut indiquer des règles d'utilisation des dispositifs de communication de l'ensemble des dispositifs de communication en fonction de paramètre(s) associé(s) à une session de communication. Ainsi, lors de l'utilisation du lien, la session est établie avec les dispositifs de communication déterminés en fonction de ces règles d'utilisation. Ces règles permettent notamment d'optimiser l'utilisation du parc de dispositif de communication en fonction des capacités des terminaux par rapport aux données transmises sur la session de communication (utilisation d'un téléviseur HD pour afficher de la vidéo HD mais d'un ordinateur pour une collaboration sur une présentation, etc.) et/ou l'accès de l'utilisateur à ces dispositifs de communication lors de la session de communication (utilisation du téléphone mobile en déplacement, et de l'ordinateur au bureau, etc.). La détection de l'accès à un dispositif de communication peut être réalisée à l'aide de système de gestion de présence et/ou d'un agenda, etc.

L'invention permet, notamment, une authentification de l'individu (premier et second utilisateur) via ses différents dispositifs de communication (terminaux), une association du lien avec une facturation à au premier utilisateur (initiateur de la création du lien), une construction d'un potentiel par le premier utilisateur pour notamment mettre en partage des contenus (par exemple des applications) qu'il choisit et qu'il garde en maîtrise durable. Cette invention met en oeuvre une plateforme de lien à laquelle sera éventuellement associée une plateforme de droits d'accès aux contenus (sécurité, tatouage).

### Application industrielle

Le champ d'application de l'invention est très large, car il couvre tous les usages devenus possibles à distance grâce aux évolutions technologiques, qui s'inscrivent dans le cadre de relations fortes entre un individu et d'autres individus ou entre un individu et un professionnel ou une entreprise. Cette évolution est particulièrement intéressante dans le développement d'applications de télécommunication, de gestion des contenus (notamment le partage) et la gestion des objets communicants.

En outre, le lien selon l'invention est tel qu'il permet d'établir des sessions de communication entre des dispositifs de télécommunication quelque soit l'opérateur.

## Revendications

1. Procédé de création d'un lien de télécommunication entre un premier ensemble de dispositifs de communication associés à un premier utilisateur (U1) et un second ensemble de dispositifs de communication associés à un second utilisateur (U2) comportant une génération (C2) d'un couple d'identifiants certifiés comportant deux identifiants d'utilisateurs certifiés : un identifiant du premier utilisateur et un identifiant du second utilisateur, le couple d'identifiants certifiés étant apte à permettre, en utilisant ultérieurement le lien de télécommunication créé, un établissement direct d'une session de communication entre au moins un dispositif de communication du premier ensemble et un dispositif de communication du second ensemble.

2. Procédé de création d'un lien de télécommunication selon la revendication précédente **caractérisé en ce que** ledit procédé de création de lien de télécommunication comporte une invitation (inv U1→ U2) d'un dispositif de communication du premier ensemble disposant d'un identifiant certifié du premier utilisateur (U1) à un dispositif de communication du second ensemble disposant d'un identifiant certifié du second utilisateur (U2).

3. Programme comprenant des instructions de code de programme pour l'exécution des étapes du procédé de création de lien de télécommunication selon l'une quelconque des revendications précédentes lorsque ledit programme est exécuté par un processeur.

4. Procédé d'établissement d'une session de communication utilisant un lien de télécommunication comportant, ultérieurement à la création du lien de télécommunication entre un premier ensemble de dispositifs de communication associés à un premier utilisateur (U1) et un second ensemble de dispositifs de communication associés à un second utilisateur (U2), un établissement direct, à partir d'un couple d'identifiants certifiés comportant deux identifiants d'utilisateurs certifiés: un identifiant d'un premier utilisateur et un identifiant d'un second utilisateur (U2) d'un lien de télécommunication, d'une session de communication (ss_com) entre au moins un dispositif de communication d'un premier ensemble de dispositifs de communication associés audit premier utilisateur (U1) et un dispositif de communication d'un second ensemble de dispositifs de communication associés audit second utilisateur (U2).

5. Procédé d'établissement d'une session de communication utilisant un lien de télécommunication selon la revendication précédente **caractérisé en ce que** ledit procédé comporte un transfert du premier utilisateur (U1) vers un troisième utilisateur (U3), ledit transfert permettant de transférer ladite session de communication du dispositif de communication d'un premier ensemble de dispositifs de communication associés audit premier utilisateur (U1) vers au moins un dispositif de communication d'un troisième ensemble de dispositifs de communication associés au troisième utilisateur (U3).

6. Procédé d'établissement d'une session de communication utilisant un lien de télécommunication selon l'une des revendications 4 ou 5 **caractérisé en ce que** ledit procédé comporte une association d'une application à partager (P) avec ledit lien de télécommunication.

7. Procédé d'établissement d'une session de communication utilisant un lien de télécommunication selon l'une des revendications 4 à 6 **caractérisé en ce que** ledit procédé comporte un transfert du premier utilisateur (U1) vers un troisième utilisateur (U3), ledit transfert permettant de transférer du premier utilisateur (U1) au troisième utilisateur (U3) un partage d'une application à partager (P) associée audit lien du premier utilisateur (U1) avec le deuxième utilisateur (U2).

8. Procédé d'établissement d'une session de communication utilisant un lien de télécommunication selon l'une des revendications 4 à 7 **caractérisé en ce que** ledit procédé comporte une résiliation (suppr_LC_U1_U2) d'un lien de télécommunication entre un premier et un second utilisateurs sur demande (nul_LC_U1_U2) d'au moins un dispositif de communication parmi des dispositifs d'un premier ensemble de dispositifs de communication associés à un premier utilisateur (U1) et d'un second ensemble de dispositifs de communication associés à un second utilisateur (U2).

9. Programme comprenant des instructions de code de programme pour l'exécution des étapes du procédé d'établissement d'une session de communication utilisant un lien de télécommunication selon l'une quelconque des revendications 4 à 8 lorsque ledit programme est exécuté par un processeur.

10. Lien de télécommunication comportant un couple d'identifiants certifiés, le couple d'identifiants certifiés comportant deux identifiants d'utilisateurs certifiés : un identifiant d'un premier utilisateur et un identifiant d'un second utilisateur, le couple d'identifiants certifiés étant apte à permettre, en utilisant ultérieurement le lien de télécommunication créé, un établissement direct d'une session de communication entre au moins un dispositif de communication d'un premier ensemble de dispositifs de communication associés audit premier utilisateur (U1) et un dispositif de communication d'un second ensemble de dispositifs de communication associés audit second utilisateur (U2).

11. Dispositif d'un réseau de télécommunication **caractérisé en ce que** ledit dispositif du réseau de télécommunication comporte des moyens de génération (GEN_LC) d'un couple d'identifiants certifiés comportant deux d'identifiants d'utilisateurs certifiés: un identifiant d'un premier utilisateur et un identifiant d'un second utilisateur, le couple d'identifiants certifiés étant apte à permettre, en utilisant ultérieurement le lien de télécommunication créé, un établissement direct d'une session de communication entre au moins un dispositif de communication d'un premier ensemble de dispositifs de communication associés audit premier utilisateur (U1) et un dispositif de communication d'un second ensemble de dispositifs de communication associés audit second utilisateur (U2).

12. Dispositif d'un réseau de télécommunication selon la revendication précédente **caractérisé en ce que** ledit dispositif d'un réseau de télécommunication comporte des moyens d'établissement, à partir d'un couple d'identifiants certifiés d'un premier et d'un second utilisateur (U2), d'une session de communication (SS_MGT) entre ledit dispositif de communication dudit premier utilisateur (U1) et un dispositif de communication dudit second ensemble.

13. Dispositif de gestion d'un service relationnel entre utilisateurs comportant un dispositif du réseau de télécommunication selon la revendication 11.

14. Dispositif de gestion d'un service selon la revendication précédente comportant des moyens de stockages (STCK) de contenus associés à un premier utilisateur (U1) dudit lien de télécommunication apte à permettre à un dispositif de communication du second utilisateur (U2) l'accès audit contenu associé audit premier utilisateur (U1) dudit lien de télécommunication lors d'une session de télécommunication établie en utilisant ledit lien.

15. Dispositif de communication d'un premier utilisateur (U1) comportant un dispositif du réseau de télécommunication selon la revendication 11 dans lequel l'identifiant certifié du premier utilisateur (U1) est fourni par ledit dispositif de communication.

## Patentansprüche

1. Verfahren zum Erstellen einer Telekommunikationsverbindung zwischen einer ersten Anordnung von Kommunikationsgeräten, die einem ersten Benutzer (U1) zugeordnet werden, und einer zweiten Anordnung von Kommunikationsgeräten, die einem zweiten Benutzer (U2) zugeordnet werden, umfassend das Generieren (C2) von einem Paar zertifizierter Kennungen, die zwei zertifizierte Kennungen von Benutzern aufweisen: eine Kennung des ersten Benutzers und eine Kennung des zweiten Benutzers, wobei das Paar zertifizierter Kennungen geeignet ist, indem es später die erstellte Telekommunikationsverbindung verwendet, ein direktes Aufbauen einer Kommunikationssitzung zwischen mindestens einem Kommunikationsgerät der ersten Anordnung und einem Kommunikationsgerät der zweiten Anordnung zu ermöglichen.

2. Verfahren zum Erstellen einer Telekommunikationsverbindung nach dem vorhergehenden Anspruch, **dadurch gekennzeichnet, dass** das Verfahren zum Erstellen der Telekommunikationsverbindung eine Aufforderung (inv U1 → U2) eines Kommunikationsgerätes der ersten Anordnung, das über eine zertifizierte Kennung des ersten Benutzers (U1) verfügt, an ein Kommunikationsgerät der zweiten Anordnung, das über eine zertifizierte Kennung des zweiten Benutzers (U2) verfügt, aufweist.

3. Programm, das Programmcodebefehle für die Ausführung der Schritte des Verfahrens zum Erstellen einer Telekommunikationsverbindung nach einem der vorhergehenden Ansprüche aufweist, wenn das Programm von einem Prozessor ausgeführt wird.

4. Verfahren zum Aufbauen einer Kommunikationssitzung unter Verwendung einer Telekommunikationsverbindung, das nach dem Erstellen der Telekommunikationsverbindung zwischen einer ersten Anordnung von Kommunikationsgeräten, die einem ersten Benutzer (U1) zugeordnet werden, und einer zweiten Anordnung von Kommunikationsgeräten, die einem zweiten Benutzer (U2) zugeordnet werden, ein direktes Aufbauen, ausgehend von einem Paar zertifizierter Kennungen, die zwei zertifizierte Kennungen von Benutzern aufweisen: eine Kennung des ersten Benutzers und eine Kennung eines zweiten Benutzers (U2) einer Telekommunikationsverbindung, einer Kommunikationssitzung (ss_com) zwischen mindestens einem Kommunikationsgerät einer ersten Anordnung von Kommunikationsgeräten, die dem ersten Benutzer (U1) zugeordnet werden, und einem Kommunikationsgerät einer zweiten Anordnung von Kommunikationsgeräten, die dem zweiten Benutzer (U2) zugeordnet werden.

5. Verfahren zum Aufbauen einer Kommunikationssitzung unter Verwendung einer Telekommunikationsverbindung nach dem vorhergehenden Anspruch, **dadurch gekennzeichnet, dass** das Verfahren ein Übertragen des ersten Benutzers (U1) zu einem dritten Benutzer (U3) aufweist, wobei das Übertragen ermöglicht, die Kommunikationssitzung des ersten Kommunikationsgeräts der ersten Anordnung von Kommunikationsgeräten, die dem ersten Benutzer (U1) zugeordnet werden, zu mindestens einem Kommunikationsgerät einer dritten Anordnung von Kommunikationsgeräten zu übertragen, die einem dritten Benutzer (U3) zugeordnet werden.

6. Verfahren zum Aufbauen einer Kommunikationssitzung unter Verwendung einer Telekommunikationsverbindung nach einem der Ansprüche 4 oder 5, **dadurch gekennzeichnet, dass** das Verfahren ein Verbinden einer zu teilenden Anwendung (P) mit der Kommunikationsverbindung aufweist.

7. Verfahren zum Aufbauen einer Kommunikationssitzung unter Verwendung einer Telekommunikationsverbindung nach einem der Ansprüche 4 bis 6, **dadurch gekennzeichnet, dass** das Verfahren ein Übertragen des ersten Benutzers (U1) zu einem dritten Benutzer (U3) aufweist, wobei das Übertragen ermöglicht, von dem ersten Benutzer (U1) auf den dritten Benutzer (U3) ein Teilen einer zu teilenden Anwendung (P) zu übertragen, die der Verbindung des ersten Benutzers (U1) mit dem zweiten Benutzer (U2) zugeordnet wird.

8. Verfahren zum Aufbauen einer Kommunikationssitzung unter Verwendung einer Telekommunikationsverbindung nach einem der Ansprüche 4 bis 7, **dadurch gekennzeichnet, dass** das Verfahren ein Beenden (suppr_LC_Ul_U2) einer Telekommunikationsverbindung zwischen einem ersten und einem zweiten Benutzer auf Anfrage (nul_LC_Ul_U2) von mindestens einem Kommunikationsgerät unter Geräten einer ersten Anordnung von Kommunikationsgeräten, die einem ersten Benutzer (U1) zugeordnet werden, und einer zweiten Anordnung von Kommunikationsgeräten, die einem zweiten Benutzer (U2) zugeordnet werden, aufweist.

9. Programm, umfassend Programmcodebefehle für die Ausführung der Schritte des Verfahrens zum Aufbauen einer Kommunikationssitzung unter Verwendung einer Telekommunikationsverbindung nach einem der Ansprüche 4 bis 8, wenn das Programm von einem Prozessor ausgeführt wird.

10. Telekommunikationsverbindung, umfassend ein Paar zertifizierter Kennungen, wobei das Paar zertifizierter Kennungen zwei zertifizierte Kennungen von Benutzern aufweist: eine Kennung eines ersten Benutzers und eine Kennung eines zweiten Benutzers, wobei das Paar zertifizierter Kennungen geeignet ist, unter späterer Verwendung der erstellten Telekommunikationsverbindung ein direktes Aufbauen einer Kommunikationssitzung zwischen mindestens einem Kommunikationsgerät einer ersten Anordnung von Kommunikationsgeräten, die dem ersten Benutzer (U1) zugeordnet sind, und einem Kommunikationsgerät einer zweiten Anordnung von Kommunikationsgeräten, die dem zweiten Benutzer (U2) zugeordnet sind, zu ermöglichen.

11. Vorrichtung eines Telekommunikationsnetzes, **dadurch gekennzeichnet, dass** die Vorrichtung des Telekommunikationsnetzes Mittel zum Generieren (GEN_LC) eines Paares zertifizierter Kennungen aufweist, das zwei zertifizierte Kennungen von Benutzern aufweist: eine Kennung eines ersten Benutzers und eine Kennung eines zweiten Benutzers, wobei das Paar zertifizierter Kennungen geeignet ist, unter späterer Verwendung der erstellten Telekommunikationsverbindung ein direktes Aufbauen einer Kommunikationssitzung zwischen mindestens einem Kommunikationsgerät einer ersten Anordnung von Kommunikationsgeräten, die dem ersten Benutzer (U1) zugeordnet sind, und einem Kommunikationsgerät einer zweiten Anordnung von Kommunikationsgeräten, die dem zweiten Benutzer (U2) zugeordnet sind, zu ermöglichen.

12. Vorrichtung eines Telekommunikationsnetzes nach dem vorhergehenden Anspruch, **dadurch gekennzeichnet, dass** die Vorrichtung des Telekommunikationsnetzes Mittel zum Aufbauen, ausgehend von einem Paar zertifizierter Kennungen eines ersten und eines zweiten Benutzers (U2), einer Kommunikationssitzung (SS_MGT) zwischen dem Kommunikationsgerät des ersten Benutzers (U1) und einem Kommunikationsgerät der zweiten Anordnung aufweist.

13. Vorrichtung zum Verwalten eines Beziehungsdienstes zwischen Benutzern, umfassend eine Vorrichtung des Telekommunikationsnetzes nach Anspruch 11.

14. Vorrichtung zum Verwalten eines Dienstes nach dem vorhergehenden Anspruch, umfassend Mittel zum Speichern (STCK) von Inhalten, die einem ersten Benutzer (U1) der Telekommunikationsverbindung zugeordnet sind, die geeignet sind, einem Kommunikationsgerät des zweiten Benutzers (U2) den Zugang zu dem Inhalt, der dem ersten Benutzer (U1) der Telekommunikationsverbindung zugeordnet ist, bei einer Telekommunikationssitzung, die unter Verwendung der Verbindung aufgebaut ist, zu ermöglichen.

15. Kommunikationsgerät eines ersten Benutzers (U1), umfassend eine Vorrichtung des Telekommunikationsnetzes nach Anspruch 11, wobei die zertifizierte Kennung des ersten Benutzers (U1) von dem Kommunikationsgerät bereitgestellt wird.

## Claims

1. Method for creating a telecommunication link between a first set of communication devices associated with a first user (U1) and a second set of communication devices associated with a second user (U2) comprising a generation (C2) of a pair of certified identifiers comprising two certified user identifiers: an identifier of the first user and an identifier of the second user, the pair of certified identifiers being able to allow, by subsequently using the telecommunication link created, a direct establishment of a communication session between at least one communication device of a first set and a communication device of the second set.

2. Method for creating a telecommunication link according to the preceding claim, **characterized in that** said telecommunication link creation method comprises an invitation (inv U1→ U2) of a communication device of the first set having at its disposal a certified identifier of the first user (U1) to a communication device of the second set having at its disposal a certified identifier of the second user (U2).

3. Program comprising program code instructions for the execution of the steps of the telecommunication link creation method according to any one of the preceding claims when said program is executed by a processor.

4. Method of establishing a communication session using a telecommunication link, subsequent to the creation of the telecommunication link between a first set of communication devices associated with a first user (U1) and a second set of communication devices associated with a second user (U2), a direct establishment, on the basis of a pair of certified identifiers comprising two certified user identifiers: an identifier of a first user and an identifier of a second user (U2) of a telecommunication link, of a communication session (ss_com) between at least one communication device of a first set of communication devices associated with said first user (U1) and a communication device of a second set of communication devices associated with said second user (U2).

5. Method of establishing a communication session using a telecommunication link according to the preceding claim, **characterized in that** said method comprises a transfer of the first user (U1) to a third user (U3), said transfer making it possible to transfer said communication session of the communication device of a first set of communication devices associated with said first user (U1) to at least one communication device of a third set of communication devices associated with the third user (U3).

6. Method of establishing a communication session using a telecommunication link according to one of Claims 4 or 5, **characterized in that** said method comprises an association of an application to be shared (P) with said telecommunication link.

7. Method of establishing a communication session using a telecommunication link according to one of Claims 4 to 6, **characterized in that** said method comprises a transfer of the first user (U1) to a third user (U3), said transfer making it possible to transfer from the first user (U1) to the third user (U3) a sharing of an application to be shared (P) associated with said link of the first user (U1) with the second user (U2).

8. Method of establishing a communication session using a telecommunication link according to one of Claims 4 to 7, **characterized in that** said method comprises a termination (suppr_LC_U1_U2) of a telecommunication link between a first and a second user on request (nul_LC_U1_U2) of at least one communication device from among devices of a first set of communication devices associated with a first user (U1) and of a second set of communication devices associated with a second user (U2).

9. Program comprising program code instructions for the execution of the steps of the method of establishing a communication session using a telecommunication link according to any one of Claims 4 to 8 when said program is executed by a processor.

10. Telecommunication link comprising a pair of certified identifiers, the pair of certified identifiers comprising two certified user identifiers: an identifier of a first user and an identifier of a second user, the pair of certified identifiers being able to allow, by subsequently using the telecommunication link created, a direct establishment of a communication session between at least one communication device of a first set of communication devices associated with said first user (U1) and a communication device of a second set of communication devices associated with said second user (U2).

11. Device of a telecommunication network **characterized in that** said device of the telecommunication network comprises means (GEN_LC) for generating a pair of certified identifiers comprising two certified user identifiers: an identifier of a first user and an identifier of a second user, the pair of certified identifiers being able to allow, by subsequently using the telecommunication link created, a direct establishment of a communication session between at least one communication device of a first set of communication devices associated with said first user (U1) and a communication device of a second set of communication devices associated with said second user (U2) .

12. Device of a telecommunication network according to the preceding claim, **characterized in that** said device of a telecommunication network comprises means for establishing, on the basis of a pair of certified identifiers of a first and of a second user (U2), a communication session (SS_MGT) between said communication device of said first user (U1) and a communication device of said second set.

13. Device for managing a relational service between users comprising a device of the telecommunication network according to Claim 11.

14. Device for managing a service according to the preceding claim comprising means (STCK) for storing contents associated with a first user (U1) of said telecommunication link able to allow a communication device of the second user (U2) access to said content associated with said first user (U1) of said telecommunication link during a telecommunication session established by using said link.

15. Communication device of a first user (U1) comprising a device of the telecommunication network according to Claim 11, in which the certified identifier of the first user (U1) is provided by said communication device.
